Europäisches Patentamt

European Patent Office

Office européen des brevets

(11) Veröffentlichungsnummer: **0 217 035**
A1

## (12) EUROPÄISCHE PATENTANMELDUNG

(21) Anmeldenummer: 86110071.7

(22) Anmeldetag: 22.07.86

(51) Int. Cl.⁴: **B 23 C 5/24**

(30) Priorität: 28.08.85 DE 3530745

(43) Veröffentlichungstag der Anmeldung:
08.04.87 Patentblatt 87/15

(84) Benannte Vertragsstaaten:
AT BE CH DE FR GB IT LI LU NL SE

(71) Anmelder: Walter Kieninger GmbH
An den Stegmatten 7
D-7630 Lahr 17(DE)

(72) Erfinder: Kieninger, Walter
An den Stegmatten 7
D-7630 Lahr 17(DE)

(74) Vertreter: Patentanwälte Grünecker, Kinkeldey,
Stockmair & Partner
Maximilianstrasse 58
D-8000 München 22(DE)

(54) Messerkopf.

(57) Ein Messerkopf weist einen im wesentlichen zylindrischen Grundkörper (1) auf ist und mit mehreren, an dessen Umfangsbereich (13) angeordneten, auswechselbaren, in axialer und oder radialer Richtung des Grundkörpers (1) mindestens eine Schneide aufweisenden Schneidkörpern (7) versehen, wobei jeder Schneidkörper (7) an einem Trägerteil (2) gelagert ist. Um eine feinsinnige und betriebssichere Justierung der Schneidkörper (7) in axialer Richtung (13) zu ermöglichen, wird vorgeschlagen, daß der Grundkörper (1) mehrere, im wesentlichen in radialer Richtung angeordnete, in einen Außenumfangsbereich (13) sowie in einen Stirnflächenbereich (12) mündende Nuten (14) aufweist, in welchen jeweils ein Trägerteil (2) angeordnet ist und daß das Trägerteil (2) mittels einer Verstelleinrichtung (5) in axialer Richtung (13) verstellbar ist.

FIG.3

EP 0 217 035 A1

1 <u>Beschreibung</u>

Die Erfindung bezieht sich auf einen Messerkopf mit einem im wesentlichen zylindrischen Grundkörper und mit mehreren, an dessen Umfangsbereich angeordneten, auswechselbaren, in axialer und/oder radialer Richtung des Grundkörpers mindestens eine Schneide aufweisenden Schneidkörpern, wobei jeder Schneidkörper an einem Trägerteil gelagert ist.

Bei derartigen Messerköpfen, welche vornehmlich als Fräswerkzeuge in der Metallverarbeitung zur Anwendung gelangen, ist es unabdingbar, daß die Schneidkörper bzw. deren Schneiden relativ zum Grundkörper des Messerkopfes einstellbar sind. Dieser Einstellvorgang muß mit höchster Präzision erfolgen und zugleich sicherstellen, daß sich die Lage der Schneidkörper relativ zu dem Grundkörper während des Einsatzes des Messerkopfes nicht verändert. Insbesondere bei Verwendung des Messerkopfes als Schlichtwerkzeug ist es unabdingbar, die Schneiden, welche im stirnseitigen Bereich des Messerkopfes wirksam sind, mit höchster Präzision einzustellen, um die Bildung von Riefen auf dem bearbeiteten Werkstück zu verhindern.

Der Erfindung liegt die Aufgabe zugrunde, einen Messerkopf der eingangs erläuterten Art zu schaffen, welcher bei hoher Betriebssicherheit und einfacher Bedienbarkeit eine exakte Einstellung der Schneidkörper relativ zum Grundkörper ermöglicht.

Die Aufgabe wird erfindungsgemäß dadurch gelöst, daß der Grundkörper mehrere, im wesentlichen in radialer Richtung angeordnete, in einen Außenumfangsbereich sowie in einen Stirnflächenbereich mündende Nuten aufweist, in welchen jeweils ein Trägerteil angeordnet ist, und daß das Trägerteil mittels einer Verstelleinrichtung in axialer Richtung verstellbar ist.

Der erfindungsgemäße Messerkopf zeichnet sich durch eine Reihe erheblicher Vorteile aus. Die Nuten können in dem Grundkörper durch einfache mechanische Bearbeitungsvorgänge, z.B. einen Fräsvorgang, erzeugt werden. Auf diese Weise ist es möglich, den Grundkörper kostengünstig herzustellen. Da die Nuten sowohl in den Stirnflächenbereich als auch in den Außenumfangsbereich des Grundkörpers münden, ist es möglich, Trägerteile beliebiger Abmessungen und Ausgestaltungen in die Nuten einzusetzen, vorausgesetzt die Breite der Nut entspricht der Breite des Trägerteils. Da der Schneidkörper an dem Trägerteil gelagert ist, führt eine axiale Verstellung des Trägerteils mittels einer Verstelleinrichtung ebenfalls zu einer axialen Verstellung des Schneidkörpers relativ zu dem Grundkörper. Somit ist es möglich, jeden einzelnen Schneidkörper, welcher z.B. in Form einer Hartmetallschneidplatte ausgebildet sein kann, einzeln einzustellen. Somit ist ein optimaler Planlauf der einzelnen Schneidkörper bzw. ihrer Schneiden erreichbar.

Eine vorteilhafte Ausgestaltung des Messerkopfes ist dadurch gegeben, daß die Verstelleinrichtung in Form einer Differentialschraube ausgebildet ist, die in einer axial angeordneten Gewindebohrung des Grundkörpers und in einer mit der Gewindebohrung fluchtenden Gewindebohrung des Trägerteils angeordnet ist. Durch eine derartige Verstelleinrichtung ist es möglich, das Trägerteil in beliebig feinen Abstufungen relativ zu dem Grundkörper in axialer Richtung zu verstellen. Die Feinheit des Einstellvorganges hängt lediglich von der Steigung des Gewindes der Differentialschraube ab. Die Differentialschraube ist in ihrer Länge in zwei Abschnitte unterteilt, welche jeweils mit einem Gewinde versehen sind. Die Gewindeabschnitte weisen beide eine gleiche Geometrie auf, mit dem Unterschied, daß das eine Gewinde rechtsgängig und das andere linksgängig ausgestaltet ist.

Eine vorteilhafte Ausgestaltung des erfindungsgemäßen Messerkopfes ergibt sich auch daraus, daß der Trägerteil mittels einer im wesentlichen radial wirkenden Spanneinrichtung am Grundkörper fixierbar ist. Nachdem der Trägerteil in axialer Richtung mittels der Differentialschraube einjustiert wurde, kann er nunmehr mittels der Spanneinrichtung in fester Weise am Grundkörper fixiert werden. Da der Trägerteil über die Differentialschraube mit dem Grundkörper verbunden ist, führt eine Fixierung durch die Spanneinrichtung nicht zu einer Lageveränderung zwischen dem Trägerteil und dem Grundkörper.

Eine günstige Ausgestaltung ergibt sich auch daraus, daß der Trägerteil und die Nut jeweils parallele Seitenflächen aufweisen. Dies ermöglicht einerseits eine kostengünstige Herstellung der Teile, andererseits ist gewährleistet, daß in jeder Position eine leichte und betriebssichere Bewegbarkeit des Trägerteils relativ zu dem Grundkörper sichergestellt ist.

Eine besonders günstige Ausgestaltung ist auch dadurch gegeben, daß der Trägerteil mittels eines elastischen Elements in Richtung auf die in Drehrichtung hinter dem Trägerteil liegende Nutfläche vorspannbar ist. Auf diese Weise wird erreicht, daß der Trägerteil stets in Anlage an diese Nutfläche bringbar ist, so daß sowohl vor als auch nach der Fixierung durch die Spanneinrichtung auf den Trägerteil einwirkende Kräfte direkt auf den Grundkörper übertragen werden. Somit wird verhindert, daß Schwingungen zwischen diesen Teilen auftreten, welche zu Oberflächenfehlern der zu bearbeitenden Teile, z.B. Rattermarken führen könnten. Durch die Elastizität des elastischen Elementes ist weiterhin sichergestellt, daß die axiale Verstellbarkeit des Trägerteils nicht behindert wird.

Um zusätzlich zu der axialen Verstellbarkeit des Schneidkörpers mittels des Trägerteils auch eine radiale Verstellbarkeit des Schneidkörpers zu gewährleisten, ist dieser an einem Käfig gelagert, wobei der Käfig relativ zu dem Trägerteil um eine im wesentlichen tangential zum Grundkörper angeordnete Achse steuerbar ist. Diese tangentiale Achse ist bevorzugterweise außerhalb des Grundkörpers in einem Übergangsbereich zwischen dem Stirnflächenbereich und dem Außenumfangsbereich angeordnet. Die Schwenkbarkeit des Käfigs wird erfindungsgemäß dadurch erreicht, daß eine Einstelleinrichtung in Form zweier Einstellschrauben vorgesehen ist, welche in zueinander parallelen, im wesentlichen radialen Ebenen angeordnet sind. Die beiden Achsen der Einstellschrauben schneiden sich bevorzugterweise unter einem spitzen Winkel, wobei eine Einstellschraube im wesentlichen axial zum Grundkörper angeordnet ist. Somit ist es möglich, durch wechselseitiges Lockern oder Anziehen der Einstellschrauben eine Verschwenkung des Käfigs relativ zu dem Trägerteil zu ermöglichen. Dabei erweist es sich als besonders vorteilhaft, daß der Käfig in der Nut angeordnet ist und dieselbe Breite wie das Trägerteil bzw. wie die Nut aufweist. Somit ist eine sichere Führung des Käfigs gewährleistet. Der Eingriffsbereich zwischen dem Käfig und dem Trägerteil ist bevorzugterweise in Form eines Teils einer Zylindermantelfläche ausgebildet, deren Krümmungsmittelpunkt mit der Schwenkachse des Käfigs zusammenfällt. Auf diese Weise ist es möglich, stets eine sichere Anlage des Käfigs an dem Trägerteil zu gewährleisten.

Im folgenden wird die Erfindung anhand von Ausführungsbeispielen in Verbindung mit der Zeichnung beschrieben. Dabei zeigt:

Fig. 1 eine schematisierte Draufsicht auf einen Teil eines erfindungsgemäßen Messerkopfes,

Fig. 2 eine Seitenansicht auf die in Fig. 1 obenliegende Seite,

Fig. 3  einen Schnitt entlang der Linie III-III von Fig. 2,

Fig. 4  einen Schnitt entlang der Linie IV-IV von Fig. 2,

Fig. 5  einen Schnitt entlang der Linie V-V von Fig. 1,

Fig. 6  einen Schnitt entlang der Linie VI-VI von Fig. 5,

Fig. 7  eine Detailansicht analog Fig. 5,

Fig. 8  eine Detailansicht analog Fig. 5.


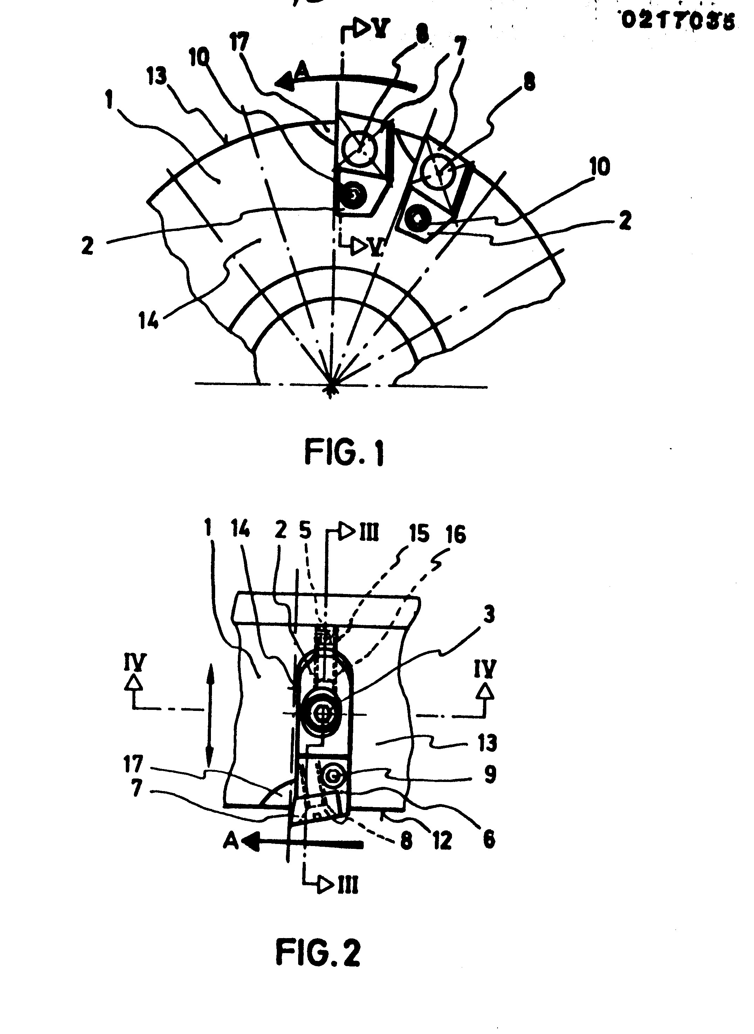

Fig. 1 zeigt in der Draufsicht den erfindungsgemäßen Messerkopf, welcher einen Grundkörper 1 aufweist, der mit einer Vielzahl von Schneidplatten 7 bestückt ist. Mit dem Pfeil A ist die Drehrichtung des Messerkopfes dargestellt. In Schneidrichtung vor der Schneidkante jeder Schneidplatte 7 ist eine Ausnehmung 17 ausgebildet, welche der Abfuhr der Späne dient. Die Schneidplatten 7 sind mittels Befestigungsschrauben 8 befestigt, welche in Fig. 1 nur schematisch dargestellt sind.

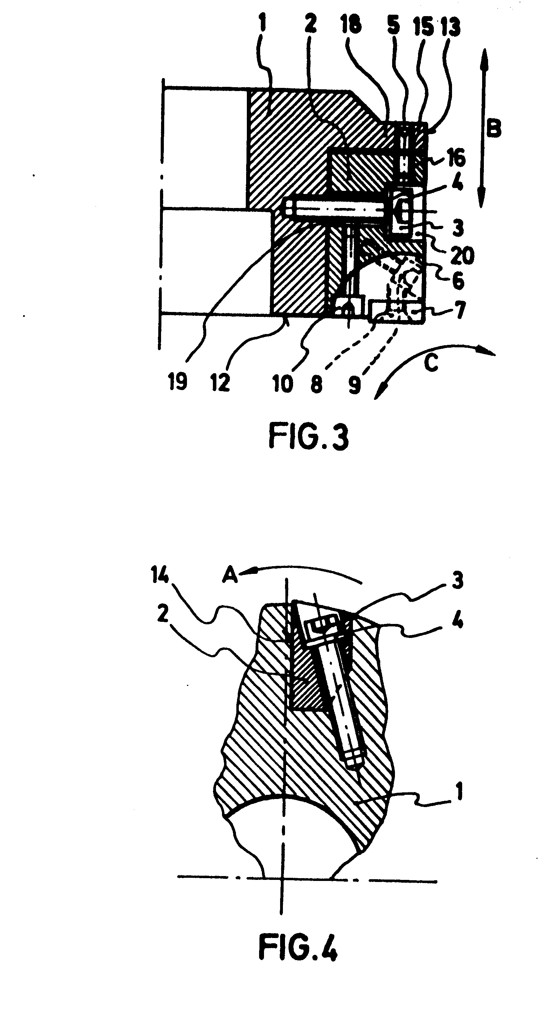

Fig. 2 zeigt eine Seitenansicht auf die in Fig. 1 obenliegende Seite. Der Grundkörper 1 ist, analog der Zahl der zu verwendenden Schneidplatten mit mehreren Nuten 14 versehen, welche sich im wesentlichen in radialer Richtung erstrecken und sich zu einem Stirnflächenbereich 12 und einem Außenumfangsbereich 13 des Grundkörpers 1 hin öffnen. In der jeweiligen Nut 14 ist ein Trägerteil 2 eingesetzt, welches in axialer Richtung bewegbar ist. Die axiale Verstellung erfolgt mittels einer in Form einer Differentialschraube ausgebildeten Axialverstelleinrichtung, welche in Zusammenhang mit Fig. 3 nachstehend im einzelnen noch beschrieben werden wird. Mittels einer Spanneinrichtung in Form einer Spannschraube 3 ist das Trägerteil 2 fest am Grundkörper 1 fixierbar. Die Schneidplatte 7 ist mittels der Befestigungsschraube 8 so am Trägerteil 2 befestigt, daß die
benötigten und dem jeweiligen Einzelfall angepaßten Schneidenwinkel gewährleistet sind.

Fig. 3 zeigt einen Schnitt entlang der Linie III-III von
Fig. 2. Der Grundkörper 1 ist in Form eines Ringes ausgestaltet, welcher in seinem Zentrum eine im einzelnen nicht
dargestellte Ausnehmung zur Verbindung mit einer nicht
dargestellten Werkzeugaufnahme aufweist. An seinem Außenumfangsbereich 13 weist der Grundkörper 1 einen Flansch
18 auf, welcher ringförmig ausgestaltet ist. In dem Flansch
18 ist eine axial verlaufende Gewindebohrung 15 vorgesehen,
welche mit einer Gewindebohrung 16 in dem Trägerteil 2
fluchtet. Die Gewindebohrungen 15 und 16 weisen jeweils ein
Rechts- bzw. Linksgewinde auf, welches in seiner Geometrie
an die Differentialschraube 5 angepaßt ist. Eine Drehung
der Differentialschraube 5 führt somit zu einer axialen Verschiebung des Trägerteils 2 in der Nut 14 des Grundkörpers
1. Wie bereits beschrieben, wird der Trägerteil 2 mittels
der Spannschraube 3 am Grundkörper 1 fixiert, nachdem die
entsprechende Axialverstellung erfolgt ist. Da es bei den
überlicherweise verwendeten Präzisionsschneidplatten
(Schneidkörper 7) nicht erforderlich ist, eine große
axiale Verstellbarkeit vorzusehen, wird die Verstellbarkeit
in axialer Richtung nicht durch die Spannschraube 3 behindert. Vielmehr ist der Trägerteil 2 mit einer Ausnehmung
19 versehen, welche in Form eines Langloches ausgebildet
ist. Ebenso ist eine Ausnehmung 20 zur Aufnahme des Kopfes
der Spanschraube 3 in Form eines Langloches ausgebildet.
Üblicherweise ist unterhalb des Kopfes der Spannschraube 3
eine Scheibe 4 vorgesehen, welche in Form einer Federscheibe oder einer Unterlegscheibe ausgebildet sein kann.
Somit ist es möglich, den Trägerteil 2 in Richtung des
Pfeiles B axial zu verstellen. Um auch eine radiale Verstellung des Schneidkörpers 7 relativ zu dem Grundkörper 1 zu ermöglichen, ist dieser an einen Käfig 6 mittels der Befestigungsschraube 8 befestigt. Der Käfig 6 ist um eine tangential zum Grundkörper 1 angeordnete Achse verschwenkbar. Diese Verschwenkrichtung ist in Fig. 3 schematisch durch den Pfeil C dargestellt. Um den Käfig 6 am Grundkörper 1 zu befestigen und in der gewünschten Schwenkstellung zu fixieren, sind eine erste (9) und eine zweite (10) Einstellschraube vorgesehen, welche zusammen eine Einstelleinrichtung bilden. Die zweite Einstellschraube 10 ist in axialer Richtung angeordnet und in einem Gewinde des Trägerteils 2 aufgenommen. Die erste Einstellschraube 9 ist in einem spitzen Winkel zur Achse der zweiten Einstellschraube 10 ebenfalls in einer Gewindebohrung des Trägerteils 2 angeordnet. Ein wechselseitiges Lösen bzw. Anziehen der ersten bzw. zweiten Einstellschraube führt somit zu einer Verschwenkung des Käfigs 6 bezüglich dem Trägerteil 2. Dabei muß betont werden, daß bei den zur Verwendung kommenden Präzisionsschneidkörpern zur Einjustierung des Messerkopfes nur eine geringe radiale Verstellung des Schneidkörpers 7 bzw. eine geringe Verschwenkung des Käfigs 6 erforderlich ist.

Fig. 4 zeigt einen Schnitt entlang der Linie IV-IV von Fig. 2. Die Spannschraube 3, welcher in einer Gewindebohrung des Grundkörpers 1 aufgenommen ist, ist in ihrer Längsachse in einem Winkel gegen die radiale Richtung des Grundkörpers 1 geneigt. Dies führt zu einer sicheren Verklemmung zwischen dem Trägerteil 2 und der Nut 14. Zur Unterstützung dieses Verklemmungseffektes ist der Nutgrund bzw. die Unterseite des Trägerteils 2 mit einer Abschrägung versehen, so daß bei Anziehen der Spannschraube 3 eine Verkeilung zwischen dem Trägerteil 2 und dem Grundkörper 1 erfolgt.

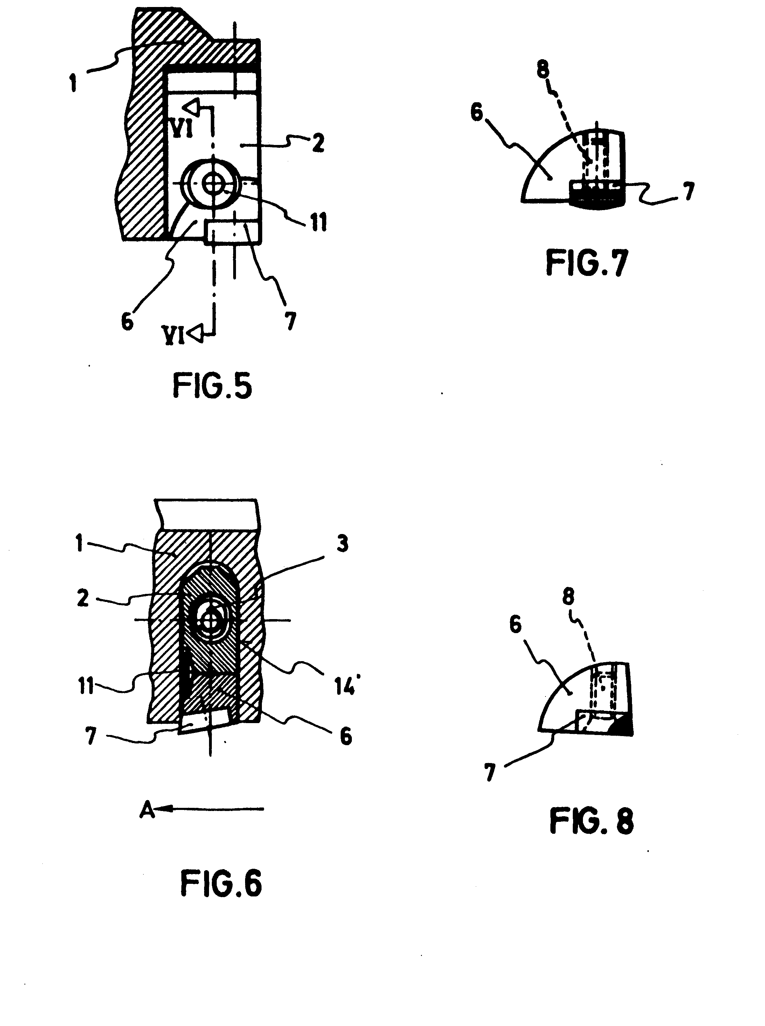

Fig. 5 zeigt einen Schnitt entlang der Linie V-V von Fig. 1.

Die Fig. 6 zeigt einen Schnitt entlang der Linie VI-VI von Fig. 5. Der Trägerteil 2 sowie der Käfig 6 weisen auf ihrer in Drehrichtung vorne liegenden Seite eine Ausnehmung auf, in welcher ein elastisches Element 11 angeordnet ist. Das elastische Element 11 ist vorzugsweise in Form von Tellerfedern ausgebildet und führt dazu, daß der Träger 2 und der Käfig 6 gegen die in Drehrichtung rückwärtsliegende Seite 14' der Nut 14 vorgespannt werden. Auf diese Weise ist sichergestellt, daß stets eine formschlüssige Anlage des Trägerteils 2 und des Käfigs 6 gegen die Nut erfolgen. Somit führt ein Lösen der Spannschraube 3 nicht zu einer Lageveränderung dieser Teile bezüglich dem Grundkörper 1.

Die Fig. 7 und 8 zeigen die Teilansichten des Käfigs 6 analog den Fig. 3 und 5. In diesen Detailansichten sind verschiedene Schneidkörper 7 dargestellt. Fig. 7 zeigt einen Schneidkörper 7, welcher bei einem Messerkopf zur Anwendung kommt, welcher nur in seinem stirnflächigen Bereich einen Schneidvorgang durchführt. In Fig. 8 ist ein Schneidkörper 7 dargestellt, mit Hilfe dessen nicht nur der stirnflächige (axiale) Bereich des Messerkopfes zur Durchführung eines Schneidvorganges wirkt, sondern auch der (radiale) Außenumfangsbereich. Zu diesem Zweck ist der Käfig 6 in seinem radialen Bereich zur Bildung eines Freischliffes rückweichend ausgestaltet.

Die Erfindung ist nicht auf die dargestellten Ausführungsbeispiele beschränkt. Vielmehr kann sowohl die Breite der Nut 14 als auch die Form des Trägerteils 2 sowie des Käfigs 6 an die jeweils zur Anwendung kommenden Schneidkörper 7 angepaßt werden. Auch die Zahl der Nuten 14 bzw. Schneidkörper 7 ist dem jeweiligen Durchmesser des Grundkörpers 1 anpaßbar.

GRÜNECKER, KINKELDEY, STOCKMAIR & PARTNER

*- 1 -*

PATENTANWÄLTE **0217035**

EUROPEAN PATENT ATTORNEYS

A GRÜNECKER DR. ING
DR H KINKELDEY DR. ING
DR W STOCKMAIR DR. ING AE E (CALTECH.
DR K SCHUMANN DR. PHYS
P H JAKOB DR. ING
DR G BEZOLD DR. CHEM
W MEISTER DR. ING
H HILGERS DR. ING
DR. H MEYER-PLATH DR. ING
DR M BOTT-BODENHAUSEN' DR. PHYS
DR. U KINKELDEY DR. BIOL

*LICENCE EN DROIT DE L UNIV DE GENEVE

8000 MÜNCHEN 22
MAXIMILIANSTRASSE 58

EP 3045-Fr

Walter Kieninger GmbH
An den Stegmatten 7
D-7630 Lahr 17

Messerkopf

P a t e n t a n s p r ü c h e

1. Messerkopf mit einem im wesentlichen zylindrischen Grundkörper und mit mehreren, an dessen Umfangsbereich angeordneten, auswechselbaren, in axialer und/oder radialer Richtung des Grundkörpers mindestens eine Schneide aufweisenden Schneidkörpern, wobei jeder Schneidkörper an einem Trägerteil gelagert ist, dadurch g e k e n n z e i c h n e t , daß der Grundkörper (1) mehrere, im wesentlichen in radialer Richtung angeordnete, in einen Außenumfangsbereich (13) sowie in einen Stirnflächenbereich (12) mündende Nuten (14) aufweist, in welchen jeweils ein Trägerteil (2) angeordnet ist, und daß das Trägerteil (2) mittels einer Verstelleinrichtung (5) in axialer Richtung verstellbar ist.

2. Messerkopf nach Anspruch 1, dadurch g e k e n n - z e i c h n e t , daß die Verstelleinrichtung (5) in Form einer Differentialschraube ausgebildet ist, die in einer axial angeordneten Gewindebohrung (15) des Grundkörpers (1) und in einer mit der Gewindebohrung (15) fluchtenden Gewindebohrung (16) des Trägerteils (2) angeordnet ist.

3. Messerkopf nach einem der Ansprüche 1 oder 2, dadurch g e k e n n z e i c h n e t , daß der Trägerteil (2) mittels einer im wesentlichen radial wirkenden Spanneinrichtung (3) am Grundkörper (1) fixierbar ist.

4. Messerkopf nach einem der Ansprüche 1 bis 3, dadurch g e k e n n z e i c h n e t , daß der Trägerteil (2) und die Nut (14) jeweils parallele Seitenflächen aufweisen.

5. Messerkopf nach einem der Ansprüche 1 bis 4, dadurch g e k e n n z e i c h n e t , daß der Trägerteil (2) mittels eines elastischen Elements (11) in Richtung auf die in Drehrichtung hinter dem Trägerteil (2) liegende Nutfläche (14') vorspannbar ist.

6. Messerkopf nach einem der Ansprüche 1 bis 5, dadurch g e k e n n z e i c h n e t , daß der Schneidkörper (7) an einem Käfig (6) gelagert ist und daß der Käfig (6) relativ zu dem Trägerteil (2) um eine im wesentlichen tangential zum Grundkörper (1) angeordnete Achse schwenkbar ist.

7. Messerkopf nach Anspruch 6, dadurch g e k e n n - z e i c h n e t , daß der Käfig (6) in der Nut (14) angeordnet und mit zumindest einer Einstelleinrichtung (9, 10) an dem Trägerteil (2) fixierbar ist.

8. Messerkopf nach Anspruch 7, dadurch g e k e n n - z e i c h n e t , daß die Einstelleinrichtung (9, 10) in

3

Form einer ersten (9) und einer zweiten (10) Einstellschraube ausgebildet ist, wobei die Einstellschraube (9, 10) in zueinander parallelen, im wesentlichen radialen Ebenen angeordnet sind.

9. Messerkopf nach Anspruch 8, dadurch g e k e n n - z e i c h n e t , daß die erste Einstellschraube (9) im wesentlichen axial und die zweite Einstellschraube (10) in einem spitzen Winkel zu der ersten Einstellschraube (9) angeordnet sind.

FIG. 1

FIG. 2

FIG.3

FIG.4

0217035

**FIG.5**

**FIG.6**

**FIG.7**

**FIG. 8**

# EUROPÄISCHER RECHERCHENBERICHT

**0217035**

Nummer der Anmeldung

EP 86 11 0071

Europäisches Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 140 905 (SITZMANN & HEINLEIN GMBH) * Ansprüche 1-4; Figuren 1-3, 7-9 * | 1,4,6-9 | B 23 C 5/24 |
| A | | 2,3 | |
| X | DE-U-8 118 680 (SITZMANN & HEINLEIN GMBH) * Ansprüche 1-3; Seite 6, Zeile 1 - Seite 7, Zeile 13; Figuren 1-4 * | 1,4 | |
| A | | 2,3 | |
| X | DE-A-2 339 873 (MITSUBISHI KINZOKU KOGYO K.K.) * Ansprüche 1, 5; Seite 4, Zeile 14 - Seite 6, Zeile 7; Figuren 1-6 * | 1,5 | RECHERCHIERTE SACHGEBIETE (Int. Cl.4) B 23 C 5/00 |
| A | | 2,3 | |
| | --- -/- | | |

Der vorliegende Recherchenbericht wurde für alle Patentansprüche erstellt.

| Recherchenort | Abschlußdatum der Recherche | Prüfer |
|---|---|---|
| BERLIN | 25.11.1986 | MARTIN A.E.W |

**Europäisches Patentamt**

**EUROPÄISCHER RECHERCHENBERICHT**

Nummer der Anmeldung

EP 86 11 0071

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| P,A | SOVIET INVENTIONS ILLUSTRATED, Sektion Mechanik, Woche 8607, 25. Februar 1986, Zusammenfassungsnr. 047035/07 P54, Derwent Publications Ltd., London, GB; & SU - A - 1 168 354 (LUMUMBA UNIV) 23.07.1985 (Kat. A) | 2 | |
| | --- | | |
| A | DE-A-2 007 431 (FAGERSTA BRUKS AB) * Anspruch 1; Seite 5, Zeilen 1-12 * | 3 | |
| | --- | | |
| A | DD-A- 136 010 (BRABAND) * Anspruch 1; Seiten 3, 4; Figuren 1, 2 * | 5 | |
| | --- | | |
| A | EP-A-0 126 432 (W. KIENINGER KG) * Ansprüche 1, 4; Figur 2 * | 6-9 | RECHERCHIERTE SACHGEBIETE (Int. Cl.4) |
| | --- | | |
| A | DE-A-3 042 050 (MÜLLER & CHRISTNER GMBH & CO. KG) * Seite 4, Zeile 22 - Seite 5, Zeile 8; Anspruch 1; Figuren 1, 2 * | 1,3,4 | |
| | ----- | | |

Der vorliegende Recherchenbericht wurde für alle Patentansprüche erstellt.

| Recherchenort | Abschlußdatum der Recherche | Prüfer |
|---|---|---|
| BERLIN | 25-11-1986 | MARTIN A.F.W |